# EUROPEAN PATENT APPLICATION

(11) **EP 3 945 382 A1**
(43) Date of publication of application: **02.02.2022**
(21) Application number: 20188194.3
(22) Date of filing: 28.07.2020
(51) Int. Cl.: G05B 19/418, G05B 23/02

(54) **COMPUTERIZED DEVICE AND COMPUTER-IMPLEMENTED METHOD FOR A PRODUCTION SYSTEM**

(71) Applicant: Siemens Aktiengesellschaft, 80333 München (DE)
(72) Inventor: Feiten, Wendelin, 85579 Neubiberg (DE); Kast, Bernd, 89335 Ichenhausen (DE)

(57) **Abstract**

The computerized device includes a providing unit for providing a hierarchical model of the production system, an authentication unit for authenticating a certain user, a user interface device for outputting data of the production system to the authenticated user, and an adaptation unit for adapting a representation of the data to be output in dependence on a user role and the provided hierarchical model such that the representation of data includes a plurality of different abstraction levels.

Further, an arrangement having a production system and a computerized device, a computer-implemented method and a computer program product are suggested.

## Description

The present invention relates to a computerized device for a production system for producing a number of products, said production system including a plurality of production devices with hardware and/or software configured to execute a plurality of operations for manufacturing said products. The present invention further relates to an arrangement comprising a production system and such a computerized device. Moreover, the present invention relates to a computer-implemented method and to a computer program product for operating a production system.

In a production system, like a plant, there is a huge number of different components, including different production devices and different operations executable by said production devices. As a result, there is a lot of information, lots of data. Thus, an operator operating said production system or a part of said production system has to quickly understand the structure of the production system and has to understand a large amount of data and information. He has to quickly capture those for a given situation and for a given objective.

This data is often represented by a graphical representation of the production system in which the structure of the production system and relevant data are shown using a number of monitors.

An example for such a situation is the appearance of a defect in the production system. Such a defect can be a defect of a product, a defect of an operation or a defect of one of the production devices. For identifying the defect generator generating said defect, root cause analysis may be used.

In the root cause analysis, a defect of a product or an intermediate product may be detected and the cause for occurrence of this defect needs to be found. Such a process needs to be fast and complete in the sense that any potential cause should turn up in the search, otherwise major production problems may occur. The root cause hypothesis shall be presented to the investigators or operators in a human understandable and explainable way.

Also, once a cause has been identified, there shall be a suggestion as to how the cause can be affirmed or rejected, together with the time this investigation will probably take and the related cost. Finally, suitable measures or modifications of the production system shall be suggested to prevent the same cause to take effect in the future. This may include the installation of additional sensors and shut down mechanisms of the production system.

When investigating causes for defects, the investigator, for example an expert, needs to consider the structure and function of the production system and its production devices as well as the history of parameters and control settings. This can easily become very complex, so that cases could be overlooked, or misinterpretations of situations may occur.

Conventionally, the identification of a defect generator causing a certain defect in a production system is currently done by hand to a very large extent. Depending on the complexity of the production process, this requires the joint effort of multiple experts for the various detailed production processes. The coupling of the different production steps and view is conventionally handled via conversion steps, human discussion, and intuition. For some subproblems, support by tools may be available (see references [1] to [5]), but all known tools give at best some hints, supporting the human cause analysis and do not provide a root cause analysis considering a full production process in a production system.

But the question of how the results of the root cause analysis are best displayed for the operator remains open.

It is an object of the present invention to enhance the operation of a production system.

According to a first aspect, a computerized device for a production system for producing a number of products is suggested, said production system including a plurality of production devices with hardware and/or software configured to execute a plurality of operations for manufacturing said products. The computerized device comprises:
- a first providing unit for providing a hierarchical model of the production system, said hierarchical model including a first hierarchical submodel of the production devices, a second hierarchical submodel of the operations and/or a third hierarchical submodel of the products, wherein each of the first hierarchical submodel, the second hierarchical submodel and/or the third hierarchical submodel comprises a plurality of different hierarchy levels,
- an authentication unit for authenticating a certain user from a plurality of authorized users,
- a user interface device for outputting data of the production system to the authenticated user, and
- an adaptation unit for adapting a representation of the data to be output by the user interface device in dependence on a user role of the authenticated user for operating the production system and the provided hierarchical model such that the representation of data includes a plurality of different abstraction levels.

A production system, like a production plant or plant, particularly includes hundreds of production devices, which are capable of executing hundreds of operations for producing different products. In particular, the product is an end product or an intermediate product of the production system.

Thus, by using the present hierarchical model, the computerized device is able to output essential detailed information and additional relevant context information of the production system to the authenticated user, e.g. an operator. The presentation is thus easy to grasp for the operator, wherein the presentation is particularly a graphical representation which is automatically adapted by said adaptation unit. The user interface device may include a number or a plurality of monitors or displays.

Using the present hierarchical model being capable of capturing the knowledge about a production system on different abstraction levels and to automatically output data on different abstraction levels allows both for reducing the problem size to make it computationally tractable and for an interactive human input and output. This may be also referred to as "explainable AI" which means that the humans using the present user interface device can easily understand the status of the production system.

As mentioned above, the hierarchical model includes a first hierarchical submodel of the production devices, a second hierarchical submodel of the operations and/or a third hierarchical submodel of the products. In particular, hierarchy means that these models describing the declarative (products as well as production devices and their structures in the production system) and procedural (operations) knowledge about the production system exist on different levels of abstractions. These hierarchical models describe, for instance, the knowledge about the structure of the production system, e.g. involved materials and/or products and/or relevant operations executed by relevant production devices.

In particular, for providing the hierarchical model including said first hierarchical submodel, the second hierarchical submodel and/or the third hierarchical submodel, a common formal modeling scheme or common formal modeling approach may be used. Therefore, the steps of abstracting and refining certain information can be done automatically.

In the following, several embodiments for the computerized device are described.

According to an embodiment, the adaptation unit is configured to adapt the representation of the data to be output by the user interface device such that the representation of data includes a plurality of different abstraction levels and a plurality of different display modes for different parts of the production system and/or for different parts of the different hierarchical submodels.

By using a plurality of different abstraction levels and a plurality of different display modes, the representation of the output data is individually customizable for the authenticated user, e.g. a certain operator of the production system.

According to a further embodiment, the different abstraction levels are correlated with the different hierarchical levels.

In particular, a higher hierarchical level is allocated to a higher abstraction level for displaying said representation to the authenticated user.

According to a further embodiment, the different display modes include a two-dimensional representation of at least a part of the production system, a three-dimensional representation of at least a part of the production system, a number of physical and/or chemical simulations of at least one of the production devices and/or of at least one of the operations, a number of scalable vector graphics of at least a part of the production system and/or a number of different image resolutions for the representation of data.

According to a further embodiment, the adaptation unit is configured to adapt the representation of the data to be output by the user interface device in dependence on the user role, a user right of the authenticated user for accessing the production system and an actual objective of the authenticated user.

As user roles, user rights and actual objectives may change, it is useful to adapt the representation for the authenticated user in dependence on these actual changes and to provide a representation with different abstraction levels in dependence on said actual changes.

According to a further embodiment, the adaptation unit is configured to adapt the representation of the data to be output be the user interface device by selecting a certain one of the hierarchy levels of the first hierarchy submodel, the second hierarchy submodel and/or the third hierarchy submodel based on at least the user role of the authenticated user.

According to a further embodiment, the adaptation unit is configured to adapt the representation of the data to be output be the user interface device by selecting a certain one of the hierarchy levels of the first hierarchy submodel, the second hierarchy submodel and/or the third hierarchy submodel based on at least the user role of the authenticated user and by selecting a certain part or certain parts of the production system.

According to a further embodiment, the adaptation unit is configured to adapt the representation of the data to be output by the user interface device by selecting, for each of the first hierarchical submodel, the second hierarchical submodel and the third hierarchical submodel, a respective hierarchy level of the plurality of hierarchy levels based on at least the user role of the authenticated user.

According to a further embodiment, the first hierarchical submodel, the second hierarchical submodel and the third hierarchical submodel comprise different numbers of hierarchy levels.

According to a further embodiment, a common formal modeling scheme is used for providing the first hierarchical submodel, the second hierarchical submodel and/or the third hierarchical submodel.

According to a further embodiment, the computerized device includes:
a second providing unit for providing a defect model describing at least one certain defect being observable in the production system,
a first generating unit for generating a number of versions of the hierarchical model based on the provided defect model and based on the provided hierarchical model, and
a second generating unit for generating a number of root cause hypotheses by applying a certain root cause analysis to the generated versions of the hierarchical model.

By using said hierarchical models and submodels of the production system and in particular of all its production devices and operations, the root cause analysis for the production system may be automated with a realistic complexity.

Software tools supporting root cause analysis are described in references [6] to [12].

In particular, the number of versions of the hierarchical model, also referred to as operational models, may be generated by injecting the defect model into the hierarchical model, which may be also referred to as nominal operation model. Moreover, probabilities may be used to specify how an operation, for example, generates a defect or propagates the defect in the production system. Having the versions of the hierarchical model, particularly including said probabilities, one can then automate a what-if-investigation on each abstraction level by applying a root cause analysis.

Furthermore, the hierarchy of the used models is used to obtain detectable problems which can be solved by said root cause analysis. Therefore, it is provided a realistic automatic root cause analysis for identifying defect generators in a production system based on a hierarchical model of the production system and its operations, in particular both nominal and adapted to the defect scenario based on the respective defect model. In particular, the used hierarchical model contains declarative and procedural knowledge about the production system and its operations. In addition, the present hierarchical approach for the root cause analysis reduces communication requirements, since data is only collected for those subproblems that are under investigation.

According to a further embodiment, the adaptation unit is configured to adapt the representation of a visualizing of the generated root cause hypotheses to be output to the user by the user interface device, and/or to adapt the representation of a visualizing of the identified defect generator to be output to the user by the user interface device.

According to a further embodiment, the defect generator causing said certain defect is identified based on the generated root cause hypotheses. In particular, the defect generator is identified automatically.

The problem size and complexity for identifying a defect generator causing a certain defect in the production system using root cause analysis increases exponentially with respect to the size of the production system and the number of possible operations executable by said production devices. To focus the problem size and complexity for identifying defect generators in production systems, in particular in large production systems, the hierarchical model of the production system is used here.

According to a further embodiment, the production system is modified in dependence on the identified defect generator. In particular, the production system is modified such that the certain defect shall not occur in the future.

According to a further embodiment, the user interface device is adapted to receive a user input from the user for modifying the representation and/or for modifying the production system, in particular in dependence on the visualized defect generator.

The user interface device may be also referred to as user interface. The user interface advantageously allows to insert data and visualize data, in particular for judging of abnormalities in the search of the cause, depending on the current user role and particularly the chosen level of abstraction for the processed steps which may be correlated to the user role's specific rights in the production system. This provides the opportunity to interactively guide the analysis process by users, like engineers, with their expertise about the domain. On the other hand, if no such guidance can be provided, the hierarchical model may be used for automatically searching for the causes in a systematic and formal fashion.

This dynamic adaptation of the analysis depending on the user input and user role may be very helpful for a real production plant, since the problem size and complexity for the search of the root cause increase exponentially with respect to the plant size and the number of possible operations executable by the production devices of said plant.

In particular, the computerized device may be a computer or workstation. Moreover, the computerized device may be or may include a computer-aided or computer-related system or a computer system.

The respective unit, e.g. first providing unit or the authentication unit, may be implemented in hardware and/or in software. If said unit is implemented in hardware, it may be embodied as a device, e.g. as a computer or as a processor or as a part of a system, e.g. a computer system. If said unit is implemented in software, it may be embodied as a computer program product, as a function, as a routine, as a program code or as an executable object.

According to a second aspect, an arrangement comprising a production system for producing a number of products, said production system including a plurality of production devices with hardware and/or software configured to execute a plurality of operations for manufacturing said products, and a computerized device according to the first aspect or according to an embodiment of the first aspect is suggested.

According to a third aspect, a computer-implemented method for operating a production system for producing a number of products is suggested, said production system including a plurality of production devices with hardware and/or software configured to execute a plurality of operations for manufacturing said products. The method comprises the following steps:
providing a hierarchical model of the production system, said hierarchical model including a first hierarchical submodel of the production devices, a second hierarchical submodel of the operations and/or a third hierarchical submodel of the products, wherein each of the first hierarchical submodel, the second hierarchical submodel and/or the third hierarchical submodel comprises a plurality of different hierarchy levels,
authenticating a certain user from a plurality of authorized users,
adapting a representation of data to be output by a user interface device in dependence on a user role of the authenticated user for operating the production system and the provided hierarchical model such that the representation of data includes a plurality of different abstraction levels, and
outputting the representation of data of the production system to the authenticated user using the user interface device.

The embodiments and features according to the first aspect are also embodiments of the third aspect.

According to a fourth aspect, a computer program product is suggested, wherein the computer program product comprises a program code for executing the method of the third aspect when the program code is run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations-that are not explicitly mentioned herein-of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:
- Fig. 1: shows a schematic block diagram of a first embodiment of a computerized device for a production system;
- Fig. 2: shows a schematic block diagram of an example of a hierarchical model of a production system;
- Fig. 3: shows a schematic block diagram of a first hierarchical submodel of the production devices of the hierarchical model from Fig. 2;
- Fig. 4: shows a schematic block diagram of a second hierarchical submodel of the operations of the hierarchical model from Fig. 2;
- Fig. 5: shows a schematic diagram of a first example for a representation of data to be output by the user interface device of Fig. 1;
- Fig. 6: shows a schematic diagram of a second example for a representation of data to be output by the user interface device of Fig. 1;
- Fig. 7: shows a schematic block diagram of a second embodiment of a computerized device for a production system; and
- Fig. 8: shows a sequence of method steps of a computerimplemented method for operating a production system.

In the Figures, like reference numerals designate like or functionally equivalent elements, unless otherwise indicated.

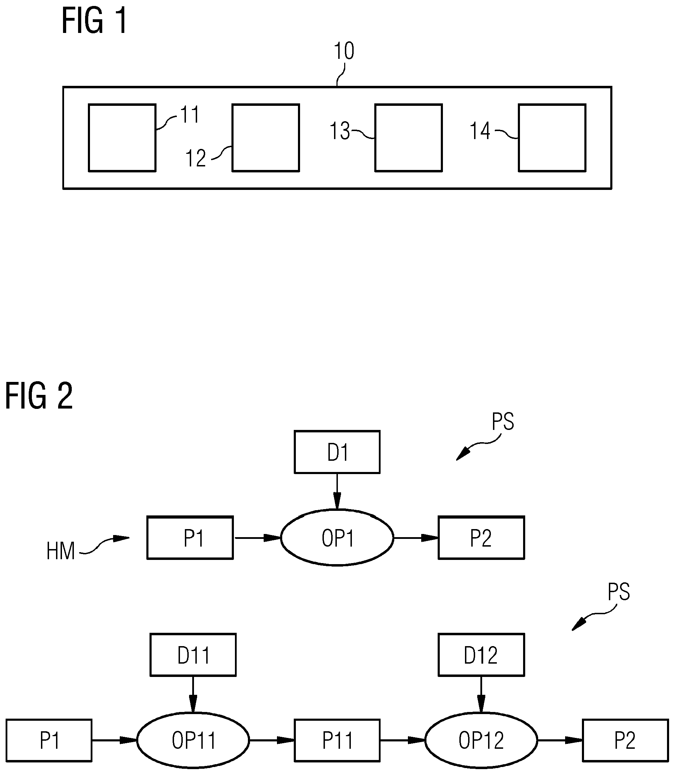

Fig. 1 depicts a schematic block diagram of a first embodiment of a computerized device 10 for a production system PS for producing a number of products. The production system PS (see Fig. 2) includes a plurality of production devices D1, D11, D12 with hardware and/or software configured to execute a plurality of operations OP1, OP11, OP12 for manufacturing said products P1, P11, P2, P3. For example, the production system PS is a creamery.

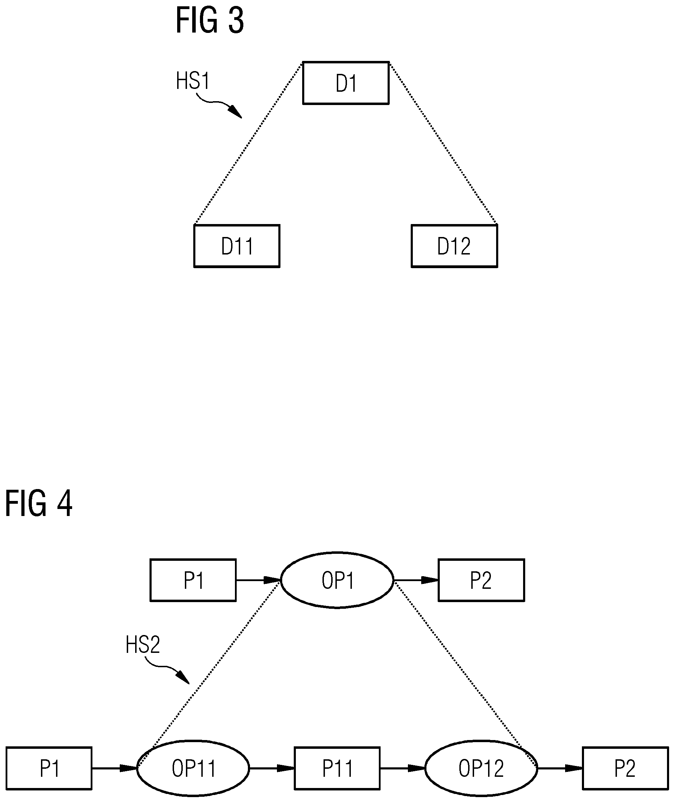

In the following, Fig. 1 is discussed referring to Fig. 2 to Fig. 4. In this regard, Fig. 2 shows a schematic block diagram of an example of a hierarchical model HM of a production system PS, Fig. 3 shows a schematic block diagram of a first hierarchical submodel HS1 of the production devices D1, D11, D12 of the hierarchical model HM from Fig. 2, and Fig. 4 shows a schematic block diagram of a second hierarchical submodel HS2 of the operations OP1, OP11, OP12 of the hierarchical model HM from Fig. 2.

In Fig. 2 to 4, product P1 is the starting product, product P2 is the end product and product P11 is an intermediate product.

The computerized device 10 of Fig. 1 comprises a first providing unit 11, an authentication unit 12, a user interface device 13 and an adaptation unit 14.

The first providing unit 11 is configured to provide a hierarchical model HM of the production system PS.

The hierarchical model HM includes a first hierarchical submodel HS1 of the production devices D1, D11, D12, a second hierarchical submodel HS2 of the operations OP1, OP11, OP12 and/or a third hierarchical submodel of the products P1, P11, P2, P3. As mentioned above, Fig. 2 shows a schematic block diagram of an example of a hierarchical model HM of a production system PS. The upper part of Fig. 2 shows an abstract view of the production system PS, and the lower part of Fig. 2 shows a more detailed view of the production system PS. By comparing the upper part and the lower part of Fig. 2, one realizes that said model HM of Fig. 2 is a hierarchical model.

Furthermore, Fig. 3 shows a schematic block diagram of a first hierarchical submodel HS1 of the production devices D1, D11, D12 of the hierarchical model HM from Fig. 2. According to the first hierarchical submodel HS1 of Fig. 3, what is also derivable from Fig. 2, the production device D1 includes a production device D11 and a production device D12.

According to the upper part of Fig. 2, the device D1 is configured to execute operation OP1, and in more detail according to the lower part of Fig. 2, the production device D11 executes operation OP11 as part of operation OP1, and the production device D12 executes operation OP12 of operation OP1.

Also from the second hierarchical submodel HS2 of Fig. 4 is derivable that the operation OP1 includes the operation OP11 and the operation OP12. With reference to the lower part of Fig. 2, the production device D11 executes the operation OP11 for producing the intermediate product P11. Further, the production device D12 executes the operation OP12 having as input the intermediate product P11 and producing the end product P2.

Moreover, a common formal modeling scheme may be used for providing the first hierarchical submodel HS1, the second hierarchical submodel HS2 and/or the third hierarchical submodel. In particular, each of the first hierarchical submodel HS1, the second hierarchical submodel HS2 and the third hierarchical submodel comprises a plurality of hierarchy levels. Moreover, the first hierarchical submodel HS1, the second hierarchical submodel HS2 and the third hierarchical submodel particularly comprise different numbers of hierarchical levels.

The authentication unit 12 of Fig. 1 is adapted to authenticate a certain user from a plurality of authorized users.

Moreover, the user interface device 13 of Fig. 1 is adapted to output data OD of the production system PS to the authenticated user. The user interface device 13 may comprise a number of output devices, e.g. including a number of monitors or displays.

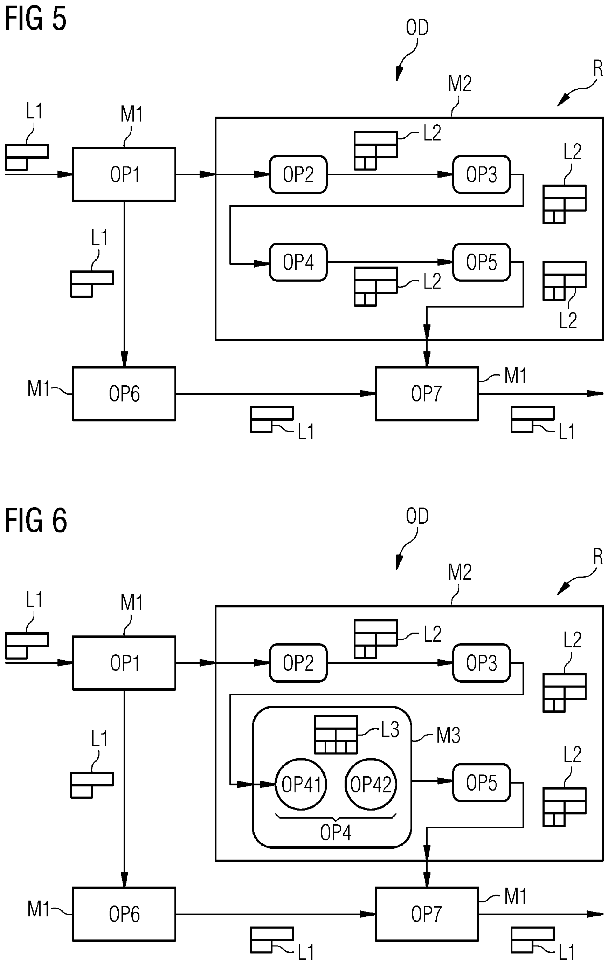

The adaptation unit 14 of Fig. 1 is configured to adapt a representation R of the data OD (see Fig. 5 and 6) to be output by the user interface device 13 in dependence on a user role of the authenticated user for operating the production system PS and the provided hierarchical model HM such that the representation R of data OD includes a plurality of different abstraction levels.

In this regard, Fig. 5 shows a schematic diagram of a first example for a representation R of data OD to be output by the user interface device 13, wherein Fig. 6 shows a schematic diagram of a second example for a representation R of data OD to be output by the user interface device 13.

In the example of Fig. 5, there are seven operations OP1 - OP7 executable by the production system PS. Further, in Fig. 5, there are two different abstraction levels L1 and L2. The abstraction level L1 is more abstract than the abstraction level L2. In other words, the abstraction level L2 is more detailed compared to the abstraction level L1.

Moreover, in Fig. 5, there are two different display modes M1, M2 for different parts of the production system PS used by said user interface device 13. For example, the display mode M1 in Fig. 5 is a two-dimensional representation of the respective one of the operations OP1, OP6 and OP7. Moreover, the display mode M2 illustrating the operations OP2 - OP5 may be embodied as a three-dimensional representation of that part of the production system PS including said operations OP2 - OP5.

According to Fig. 5, the operations OP1, OP6 and OP7 are displayed with the abstraction level L1 in the display mode M1. Moreover, the operations OP2, OP3, OP4 and OP5 are displayed with the abstraction level L2 in the display mode M2.

In particular, the different abstraction levels L1 and L2 are correlated with the different hierarchical levels of the first hierarchical submodel HS1, the second hierarchical submodel HS2 and the third hierarchical submodel.

As in Fig. 5, the example of Fig. 6 has seven operations OP1 - OP7 executable by the production system PS. In contrast to Fig. 5, there are three different abstraction levels L1, L2 and L3 in Fig. 6. In Fig. 6, the abstraction level L1 is more abstract than the abstraction L2, which itself is more abstract than the abstraction level L3. In other words, the abstraction level L3 is the abstraction level with the highest level of detail. Thus, the abstraction level L3 is more detailed than the abstraction level L2, wherein the abstraction level L2 is more detailed than the abstraction level L1.

Moreover, the operation OP4 includes two operations or suboperations, namely the operations OP41 and OP42.

Furthermore, in Fig. 6, there are three different display modes M1, M2 and M3 for different parts of the production system PS used by the user interface device 13. In particular, the display mode M1 in Fig. 6 is a two-dimensional representation of the respective one of the operations OP1, OP6 and OP7. Further, the display mode M2 illustrating the operations OP2 - OP5 is embodied as a three-dimensional representation of that part of the production system PS including said operations OP2 - OP5. Moreover, the operations OP41 and OP42 are 3D physical simulations illustrated by the user interface device 13.

In this regard, referring to Fig. 5 and Fig. 6, the adaptation unit 14 of Fig. 1 may be configured to adapt the representation R of the data OD such that said representation R includes a plurality of different abstraction levels (L1 and L2 in Fig. 5; L1, L2 and L3 in Fig. 6) and a plurality of different display modes (M1, M2 in Fig. 5; M1, M2, M3 in Fig. 6) for different parts of the production system PS.

Here, the adaptation unit 14 may adapt said representation R in dependence on the user role and a user right of the authenticated user for accessing the production system PS and an actual objective of the authenticated user. For example, referring to Fig. 6, if the user has the objective to improve operation OP4, the representation R of Fig. 6 is helpful, because operation OP4 is output with the maximum degree of details (i.e. abstraction level L3) and the most sophisticated display mode M3 in Fig. 6.

Moreover, the adaptation unit 14 may be configured to adapt the representation R of the data OD to be output by the user interface device 13 by selecting a certain one of the hierarchy levels of the first hierarchy submodel HS1, the second hierarchy submodel HS2 and/or the third hierarchy submodel based on the user role of the authenticated user and/or by selecting a certain part of the production system PS.

Alternatively or additionally, the adaptation unit 14 may be configured to adapt the representation R output by the user interface device 13 by selecting, for each of the first hierarchical submodel HS1, the second hierarchical submodel HS2 and the third hierarchical submodel, a respective hierarchy level correlated to a certain abstraction level L1 - L3 based on the user role of the authenticated user.

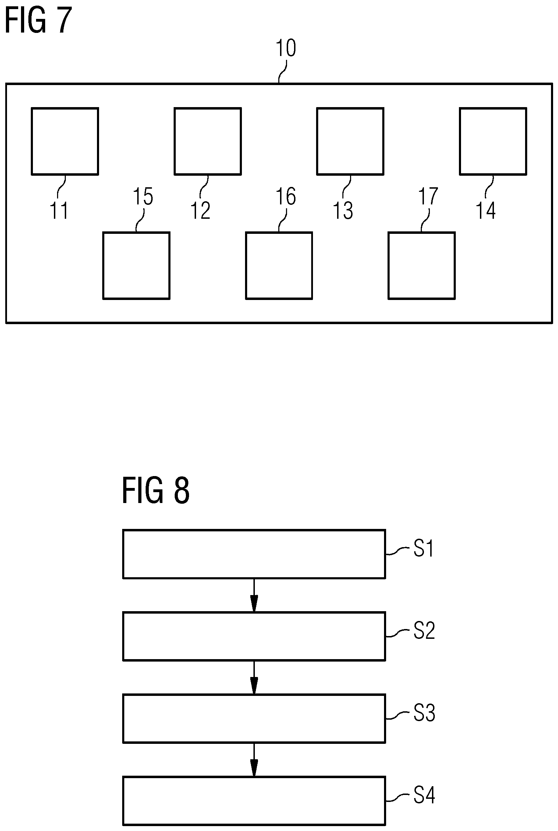

Fig. 7 shows a schematic block diagram for a second embodiment of a computerized device 10 for a production system PS. The second embodiment of Fig. 7 includes all the features of the first embodiment of the computerized device 10 of Fig. 1. Additionally, the computerized device 10 of Fig. 7 includes a second providing unit 15, a first generating unit 16 and a second generating unit 17.

The second providing unit 15 is configured to provide a defect model describing at least one certain defect being observable in the production system PS.

The first generating unit 16 is configured to generate a number of versions of the hierarchical model based on the provided defect model and based on the provided hierarchical model HM.

The second generating unit 17 is configured to generate a number of root cause hypotheses by applying a certain root cause analysis to the generated versions of the hierarchical model HM.

In this regard, the adaptation unit 14 of Fig. 7 may be configured to adapt the representation R of a visualization of the generated root cause hypotheses to be output to the user by the user interface device 13 and/or to adapt the representation R of a visualization of the identified defect generator to be output to the user by the user interface device 13.

Moreover, the user interface device 13 may be configured to receive a user input from the user for modifying the representation R and/or for modifying the production system PS, in particular in dependence on the visualized defect generator.

Fig. 8 shows a sequence of method steps of a computer-implemented method for operating a production system PS. The production system PS includes a plurality of production devices D1, D11, D12 with hardware and/or software configured to execute a plurality of operations OP1, OP11, OP12, OP3 - OP7 for manufacturing products P1, P11, P2.

In step S1, a hierarchical model HM of the production system PS is provided. An example for such a hierarchical model HM is shown in Fig. 2.

In step S2, a certain user from a plurality of authorized users is authenticated.

In step S3, a representation R of data OD (see Fig. 5 and 6) to be output by a user interface device 13 is adapted in dependence on a user role of the authenticated user for operating the production system PS and the provided hierarchical model HM such that the representation R of data OD includes a plurality of different abstraction levels L1, L2, L3.

In step S4, the representation R of data OD of the production system PS is output to the authenticated user using said user interface device 13.

Although the present invention has been described in accordance with preferred embodiments, it is obvious for the person skilled in the art that modifications are possible in all embodiments.

### Reference Numerals:

- 10: computerized device
- 11: first providing unit
- 12: authentication unit
- 13: user interface device
- 14: adaptation unit
- 15: second providing unit
- 16: first generating unit
- 17: second generating unit
- D1: production device
- D11: production device
- D12: production device
- HS1: first hierarchical submodel
- HS2: second hierarchical submodel
- HM: hierarchical model
- M1: display mode
- M2: display mode
- M3: display mode
- OD: data, output data
- OP1: operation
- OP11: operation
- OP12: operation
- OP2: operation
- OP3: operation
- OP4: operation
- OP41: operation
- OP42: operation
- OP5: operation
- OP6: operation
- OP7: operation
- P1: product
- P11: product
- P2: product
- PS: production system
- S1 - S4: method step

### References:

[1] Bridging the Gap Between Semantics and Control for Industry 4.0 and Autonomous Production; B Kast, S Albrecht, W Feiten, J Zhang; 2019 IEEE 15th International Conference on Automation Science and ..., 2019
[2] A hierarchical planner based on set-theoretic models: Towards automating the automation for autonomous systems; B Kast, V Dietrich, S Albrecht, W Feiten, J Zhang; In ICINCO 2019, 2019
[3] Der digitale Zwilling in der autonomen Robotik; B Kast, S Albrecht, V Dietrich, F Wirnshofer, W Feiten, G von Wichert; atp magazin 61 (5), 74-83, 2019
[4] Augmenting working areas with action-relevant information for intuitive humanrobot cooperation; B Kast, PS Schmitt, S Albrecht, D Meyer-Delius, J Zhang; Proceedings of the 12th International Convention on Rehabilitation ..., 2018
[5] Configuration of Perception Systems via Planning Over Factor Graphs; V Dietrich, B Kast, P Schmitt, S Albrecht, M Fiegert, W Feiten, M Beetz; 2018 IEEE International Conference on Robotics and Automation (ICRA), 1-7, 2018
[6] https://www.sologic.com
[7] https://online.visual-paradigm.com/diagrams/features/root-cause-analysis-tool/
[8] https://www.seebo.com/root-cause-analysis-software/
[9] https://www.apollorootcause.com/ page/software/realitycharting
[10] https://www.sightline.com/solutions/root-cause-analysis/
[11] https://www.quentic.com/software/quentic-core/root-cause-analysis/
[12] https://nsc.nasa.gov/RCAT

## Claims

1. A computerized device (10) for a production system (PS) for producing a number of products (P1, P11, P2), said production system (PS) including a plurality of production devices (D1, D11, D12) with hardware and/or software configured to execute a plurality of operations (OP1 - OP7) for manufacturing said products (P1, P11, P2), the computerized device (10) comprising:
- a first providing unit (11) for providing a hierarchical model (HM) of the production system (PS), said hierarchical model (HM) including a first hierarchical submodel (HS1) of the production devices (D1, D11, D12), a second hierarchical submodel (HS2) of the operations (OP1 - OP7) and/or a third hierarchical submodel of the products (P1, P11, P2), wherein each of the first hierarchical submodel (HS1), the second hierarchical submodel (HS2) and/or the third hierarchical submodel comprises a plurality of different hierarchy levels,
- an authentication unit (12) for authenticating a certain user from a plurality of authorized users,
- a user interface device (13) for outputting data (OD) of the production system (PS) to the authenticated user, and
- an adaptation unit (14) for adapting a representation (R) of the data (OD) to be output by the user interface device (13) in dependence on a user role of the authenticated user for operating the production system (PS) and the provided hierarchical model (HM) such that the representation (R) of data (OD) includes a plurality of different abstraction levels (L1, L2, L3).

2. The computerized device of claim 1,
**characterized in**
**that** the adaptation unit (14) is configured to adapt the representation (R) of the data (OD) to be output by the user interface device (13) such that the representation (R) of data (OD) includes a plurality of different abstraction levels (L1, L2, L3) and a plurality of different display modes (M1, M2, M3) for different parts of the production system (PS) and/or for different parts of the different hierarchical submodels (HS1, HS2).

3. The device of claim 1 or 2,
**characterized in**
**that** the different abstraction levels (L1, L2, L3) are correlated with the different hierarchical levels.

4. The device of one of claims 1 to 3,
**characterized in**
**that** the different display modes (M1, M2, M3) include a two-dimensional representation (M1) of at least a part of the production system (PS), a three-dimensional representation (M2) of at least a part of the production system (PS), a number of physical and/or chemical simulations (M3) of at least one of the production devices (PS) and/or of at least one of the operations (OP1 - OP7), a number of scalable vector graphics of at least a part of the production system (PS) and/or a number of different image resolutions for the representation (R) of data (OD).

5. The device of one of claims 1 to 4,
**characterized in**
**that** the adaptation unit (14) is configured to adapt the representation (R) of the data (OD) to be output by the user interface device (13) in dependence on the user role, a user right of the authenticated user for accessing the production system (PS) and an actual objective of the authenticated user.

6. The device of one of claims 1 to 5,
**characterized in**
**that** the adaptation unit (14) is configured to adapt the representation (R) of the data (OD) to be output be the user interface device (13) by selecting a certain one of the hierarchy levels of the first hierarchy submodel (HS1), the second hierarchy submodel (HS2) and/or the third hierarchy submodel based on at least the user role of the authenticated user.

7. The device of one of claims 1 to 5,
**characterized in**
**that** the adaptation unit (14) is configured to adapt the representation (R) of the data (OD) to be output be the user interface device (13) by selecting a certain one of the hierarchy levels of the first hierarchy submodel (HS1), the second hierarchy submodel (HS2) and/or the third hierarchy submodel based on at least the user role of the authenticated user and by selecting a certain part or certain parts of the production system (PS).

8. The device of one of claims 1 to 7,
**characterized in**
**that** the adaptation unit (14) is configured to adapt the representation (R) of the data (OD) to be output by the user interface device (13) by selecting, for each of the first hierarchical submodel (HS1), the second hierarchical submodel (HS2) and the third hierarchical submodel, a respective hierarchy level of the plurality of hierarchy levels based on at least the user role of the authenticated user.

9. The device of one of claims 1 to 8,
**characterized in**
**that** the first hierarchical submodel (HS1), the second hierarchical submodel (HS2) and the third hierarchical submodel comprise different numbers of hierarchy levels.

10. The device of one of claims 1 to 9,
**characterized by**
a second providing unit (15) for providing a defect model describing at least one certain defect being observable in the production system (PS),
a first generating unit (16) for generating a number of versions of the hierarchical model based on the provided defect model and based on the provided hierarchical model (HM), and
a second generating unit (17) for generating a number of root cause hypotheses by applying a certain root cause analysis to the generated versions of the hierarchical model (HM).

11. The device of claim 10,
**characterized by**
that the adaptation unit (14) is configured to adapt the representation (R) of a visualizing of the generated root cause hypotheses to be output to the user by the user interface device (13), and/or to adapt the representation (R) of a visualizing of the identified defect generator to be output to the user by the user interface device (13).

12. The device of one of claims 1 to 11,
**characterized by**
that the user interface device (13) is configured to receive a user input from the user for modifying the representation (R) and/or for modifying the production system (PS), in particular in dependence on the visualized defect generator.

13. An arrangement comprising a production system (PS) for producing a number of products (P1, P11, P2), said production system (PS) including a plurality of production devices (D1, D11, D12) with hardware and/or software configured to execute a plurality of operations (OP1 - OP7) for manufacturing said products (P1, P11, P2), and a computerized device (10) of one of claims 1 to 12.

14. A computer-implemented method for operating a production system (PS) for producing a number of products (P1, P11, P2), said production system (PS) including a plurality of production devices (D1, D11, D12) with hardware and/or software configured to execute a plurality of operations (OP1
- OP7) for manufacturing said products (P1, P11, P2), the method comprising:
- providing (S1) a hierarchical model (HM) of the production system (PS), said hierarchical model (HM) including a first hierarchical submodel (HS1) of the production devices (PS), a second hierarchical submodel (HS2) of the operations (OP1 - OP7) and/or a third hierarchical submodel of the products (P1, P11, P2), wherein each of the first hierarchical submodel (HS1), the second hierarchical submodel (HS2) and/or the third hierarchical submodel comprises a plurality of different hierarchy levels,
- authenticating (S2) a certain user from a plurality of authorized users,
- adapting (S3) a representation (R) of data (OD) to be output by a user interface device (13) in dependence on a user role of the authenticated user for operating the production system (PS) and the provided hierarchical model (HM) such that the representation (R) of data (OD) includes a plurality of different abstraction levels (L1, L2, L3), and
- outputting (S4) the representation (R) of data (OD) of the production system (PS) to the authenticated user using the user interface device (13).

15. A computer program product comprising a program code for executing the method claim 14 for operating a production system for producing a number of products when run on at least one computer.
